# EUROPEAN PATENT SPECIFICATION

(11) **EP 1 073 273 B1**
(45) Date of publication and mention of the grant of the patent: **07.04.2010**
(21) Application number: 00900865.7
(22) Date of filing: 21.01.2000
(51) Int. Cl.: H04N 5/913, H04N 7/167, H04N 9/804, H04N 7/20, H04B 1/16

(54) **DATA PROCESSING DEVICE AND DATA PROCESSING METHOD**
VORRICHTUNG UND VERFAHREN ZUR VERARBEITUNG VON DATEN
DISPOSITIF DE TRAITEMENT DE DONNEES ET PROCEDE DE TRAITEMENT DE DONNEES

(30) Priority: 21.01.1999 JP 1341799
(43) Date of publication of application: 31.01.2001
(60) Divisional application: 10001689.8
(73) Proprietor: Sony Corporation, Tokyo 141-0001 (JP)
(72) Inventor: MORINAGA, Takeo, Sony Corporation, Tokyo 141-0001 (JP); HAMADA, Ichiro, Sony Corporation, Tokyo 141-0001 (JP)
(74) Representative: DeVile, Jonathan Mark
(86) International application number: PCT/JP2000/000290
(87) International publication number: WO 2000/044170

(56) References cited:
- EP-A- 0 794 487
- WO-A-97/25816
- WO-A-99/18723
- DE-C- 19 525 425
- JP-A- 9 322 103
- US-A- 5 719 937

## Description

### Technical Field

The present invention relates to a data processing apparatus and data processing method, and suitably applied to such as an IRD (integrated receiver decoder) for the DVB (digital video broadcast).

### Background Art

Heretofore, in this type of digital broadcasting system, after the video data and audio data of plural channels are compression-coded by using the MPEG2 (moving picture experts group phase 2), these data are packetized per the predetermined unit (such as 184 [byte]) (hereinafter, the resultant packets are referred to as TS (transport stream) packets) and multiplexed, to form a transport stream which is then transmitted via terrestrial wave, satellite wave or cable as the digital broadcasting signal.

In such digital broadcasting system, a receiving apparatus extracts TS packets corresponding to a desired channel from among the TS packets contained in the transport stream received as a digital broadcasting signal, and decodes them to the video data and audio data in the original signal format according to the reverse procedure to the compression processing.

In recent years, such a receiving apparatus has plural output terminals for digital signals as output terminals for external connection (hereinafter referred to as digital output terminal). This allows audio data obtained by the aforementioned decoding, after being converted into a predetermined format, to be output to an external apparatus via an optical digital audio output terminal of IEC (International Electro-Technical Committee) 958 format, or to be output to an external apparatus via a highspeed serial interface called IEEE (institute of electrical and electronics engineers) 1394, or allows the transport stream before decoding itself to be output to an external apparatus.

Since degradation in image quality and sound quality does not occur in such digitalized video data and audio data, a digital recording apparatus can dub data unlimited number of times without degradation in quality.

Therefore, in general, by transmitting video data and audio data after adding predetermined copy control data (CCI: copy control information) at the transmitting end, copy is restricted based on the copy control data at the digital receiving end, and thus, unlawful dubbing infringing the copyright can be prevented.

According to the SCMS (serial copy management system) adopted in the IEC 958, this copy control data has three types of information: "never copy", "copy once", and "copy free". More specifically, "never copy" represents that copy is not allowed, "copy once" represents that copy is allowed only once (after copy once, the information shifts to "never copy"), and "free copy" represents that copy is allowed unlimited number of times. In the aforementioned digital broadcasting system, such copy control data is added to each program and is transmitted to prevent unlawful dubbing infringing the copyright.

However, considering that digital broadcasting signal with copy control data "copy once" is received by the aforementioned receiving apparatus having plural digital output terminals and recorded in a digital recording apparatus, the digital signal is output from the plural digital output terminals at the same time. Therefore, even if copy is allowed only once, plural copies are made by connecting each digital output terminal to a digital recording apparatus.

In addition, in practice, it has been quite difficult for the receiving apparatus equipped with plural digital output terminals to use new application that limits the number of copies such as pay-per-download.

DE 19525425 discloses a video signal receiver with a first output terminal for outputting a video signal and a second terminal for outputting an RGB signal. Only television receivers, but not video recorders, are generally capable of receiving and processing the RGB signal from the second terminal. If the transmitter of a television signal provides the receiver with an identifier, output of the signal to the first output terminal is blocked. As a result, the television signal can still be viewed via the second terminal, but recording is not possible.

US 5719937 discloses an audio system for audio data having tag information that indicates the number of copies made. If the tag information indicates that the number of generations is above a threshold, the system allows analog output of the audio signal for playing over speakers, but does not allow (further) recording of the signal.

WO 99/18723 discloses an apparatus with a copy-once watermark for video recording. A compliant recorder verifies a watermark and a copy-once bit for a video signal to allow recording of the signal. During the recording, the frame markers of the video signal are stripped, and the copy-once bit is set to copy never, thereby preventing further copying of the recorded video signal.

### Disclosure of the Invention

The invention is defined in the appended claims.

The present invention has been done considering the above point and is proposing a data processing apparatus and data processing method capable of conducting the copy control without fail.

To obviate such problems, plural digital output terminals are provided for transmitting digital data to which the predetermined copy control data is attached, said predetermined copy control data indicating whether the digital data can be copied not at all, once, or an unlimited number of times. A control means controls the output of each output terminal so as to output digital data via only one specified output terminal out of the plural output terminals according to the contents of copy restriction based on the copy control data.

As a result, in this data processing apparatus, when the copy restriction exists in the copy control data, the digital data can be prevented from being output via the plural output terminals.

Furthermore, in the case of outputting via plural output systems digital data to which predetermined copy control data is attached, said predetermined copy control data indicating whether the digital data can be copied not at all, once, or an unlimited number of times, each output system is controlled according to the contents of copy restriction in the copy control data, so as to output the digital data via only one output system out of the plural output systems.

As a result, according to this data processing method, when the copy restriction exists in the control data, digital data can be prevented from being output via the plural output systems.

### Brief Description of the Drawings

Fig. 1 is a schematic diagram showing the construction of a digital broadcasting system according to the embodiment of the present invention.
Fig. 2 is a block diagram showing the construction of a receiving apparatus according to the embodiment of the present invention.

### Best Mode for Carrying Out the Invention

With reference to the accompanying figures one embodiment of the present invention will be described. Note that, the following description is made using an EMD (electric music distribution) adopting the digital broadcasting system and this invention is applicable not only to the EMD but also to movie distribution service.

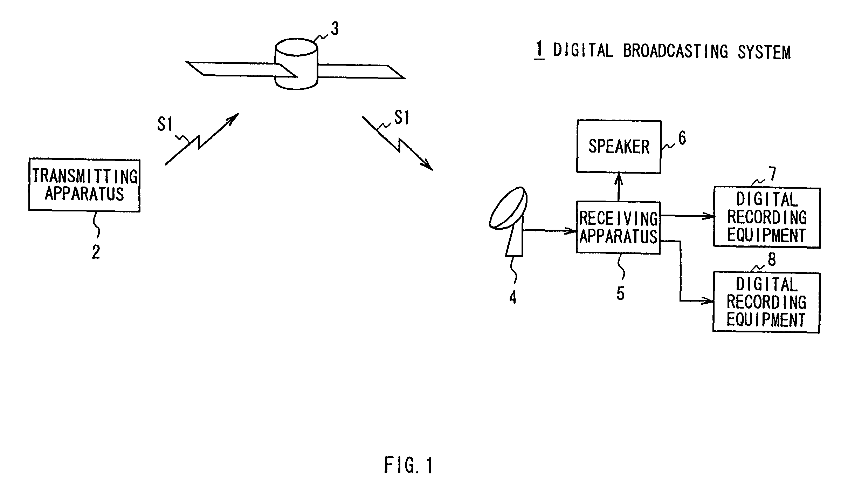

In Fig. 1, numeral 1 generally shows a digital broadcasting system 1 according to the present invention. At the transmitting apparatus 2, music data for plural channels to be provided are compression-encoded using the MPEG2 system and then, the resultants are TS-packetized per the predetermined unit and multiplexed, so as to form a transport stream. In addition, in this digital broadcasting system, not only the music distribution service but also video and audio data of programs such as a film and a drama can be compression-coded using the MPEG system and transport streams are formed. Thus formed plural transport streams are frequency-multiplexed and transmitted.

At this point, this transmitting apparatus 2 inserts a TS packet storing copy control data in a predetermined format into the transport stream for the music distribution service. This copy control data are classified under the first level that prohibits copy, the second level that allows copy once, and the third level that allows copy freely.

That is, programs which are transmitted in digital satellite broadcasting include copyright information so as to prevent unlawful copy infringing copyright. And in a PMT (program map table) of a transport stream, the copyright information which relates to the service is inserted by being added to the contents, as two descriptor, DM_copy_control_descriptor and digital_copy_control_descriptor.

The descriptor called DM_copy_control_descriptor includes information on analog video output, such as trigger information for analog copy guard. In addition, pay-per-tape (service to charge every time when recording on a recording medium such as a magnetic tape) information is also included. When a user records contents which is the pay-per-tape, he should ask and pay additional fee to release the analog copy guard. If he does not ask, the analog copy guard is not released.

The descriptor called digital_copy_control_descrptor includes CGMS (copy generation management system) information which is the same as the aforementioned SCMS and the digital output is controlled according to this information.

The CGMS is copyright information represented by two bits.
This two bits means as follows:
"00" shows that copy is allowed freely.
"01" shows that copy is not allowed in CGMS.
"10" shows that copy is allowed only once.
"11" shows that copy is never allowed.

In this invention, outputs from the plural digital output terminals are controlled according to the contents of descriptor called the digital_copy_control_descriptor.

In this way, the transmitting apparatus 2 transmits a digital broadcasting signal S1 consists of thus frequency-multiplexed transport stream via a communication satellite (CS) 3, and the transmitted digital broadcasting signal is supplied to a receiving apparatus 5 via an antenna 4.

The receiving apparatus 5 selects a desired frequency from the received digital broadcasting signal, extracts the TS packets having the audio data of a desired tune from the transport streams transmitted at the selected channel, and decodes the audio data stored in these TS packets for transmission to a speaker 6 and also for output to digital recording apparatuses 7, 8 such as a MD (mini disc) recorder via a digital output terminal (not shown) as required.

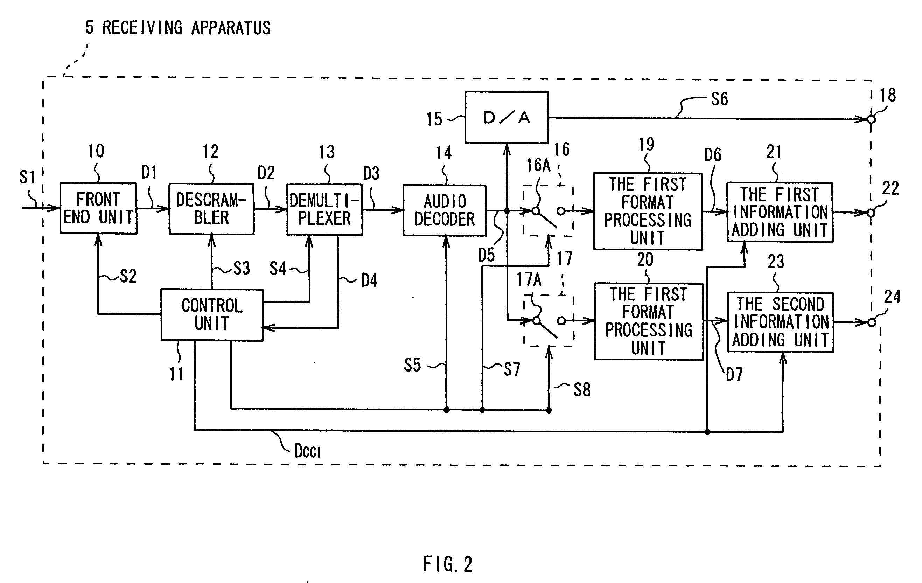

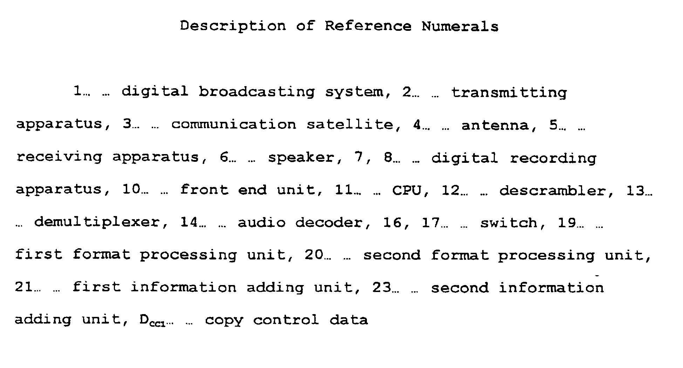

In practice, the receiving apparatus 5 is constructed as shown in Fig. 2. A front-end unit 10, receiving the digital broadcasting signal S1 via the antenna 4, tunes a frequency (frequency assigned to a transponder loaded on the communication satellite 3) based on a channel specification command S2 transmitted from a control unit 11. Then, it performs, for example, QPSK (quadrature phase shift keying) demodulation and error correction processing and outputs a transport stream D1 having the coded data of the desired program.

Then, a descrambler 12 sequentially descrambles the encrypted TS packets using a decryption signal S3 which is obtained from the control unit 11, and transmits the descrambled transport stream D2 to a demultiplexer 13.

The demultiplexer 13, receiving a control signal S4 corresponding to a program specified by the user from the control unit 11, extracts TS packets D3 having the audio data of the specified program and a TS packet D4 having the copy control data, and transmits the TS packets D3 to an audio decoder 14 and also the TS packet D4 to the control unit 11. Note that, in the case where the selected program is a film, drama, or news, TS packets having video data are also extracted and supplied to a video decoder not shown.

The audio decoder 14, after decoding the audio data included in the extracted TS packets, transmits this to a D/A (digital/analog) converter 15, an input terminal 16A of a switch 16 and an input terminal 17A of a switch 17, according to a control signal S5 which is obtained from the control unit 15.

The D/A converter 15, after converting the resultant audio data D5 to analog data, transmits this to the externally connected speaker 6 (Fig. 1) via an analog output terminal 18 as an analog audio signal S6. As a result, the speaker gives sound based on this analog audio signal S6.

On the other hand, the control unit 11 extracts copy control data D_{CC1} included in the supplied TS packet D4, judges if the copy control data D_{CC1} belongs to the first level that prohibits copy, or the second level that allows copy only once, or the third level that allows copy freely, and transmits switch signals S7 and S8 to the switches 16 and 17 respectively according to the judgment result.

In this time, only when the control unit 11 judges that the decoded copy control data D_{CC1} is the third level, the control unit 11 connects switches 16 and 17 to ON conditions. On the other hand, when it judges the copy control data D_{CC1} is the first or the second level, it connects either the switch 16 or 17 specified by the user to ON condition.

At the time when the switch 16 is ON condition and the switch 17 is OFF condition, the audio data D5 supplied from the audio decoder 14 is supplied to a first format processing unit 19. This first format processing unit 19, after converting the audio data D5 to the predetermined format according to the IEC958 for example, transmits this to a first information adding unit 21 as first audio data D6.

This first information adding unit 21, after adding the copy control data D_{CC1} to the first audio data D6, transmits this to the externally connected digital recording equipment 7 (Fig. 1) via a digital output terminal 22.

On the other hand, in the case where the switch 16 is OFF condition while the switch 17 is ON condition, the audio data D5 supplied from the audio decoder 14 is given to the second format processing unit 20. This second format processing unit 20, after converting the audio data D5 to the predetermined format according to such as the IEEE1394, transmits this to a second information adding unit 23 as the second audio data D7.

This second information adding unit 23, as well as adding the copy control data D_{CC1} to the second audio data D7, applies the encryption processing to the second audio data D7 only when the copy control data D_{CC1} shows the first or the second level. And then, it transmits this to the externally connected digital recording apparatus 8 (Fig. 1) via the digital output terminal 24. This encryption processing is based on the standard called 5CDTCP and is to protect copyright at the time of transmitting digital content data such as audio and video in the IEEE1394.

In this way, the first or the second audio data D6 or D7 to which the copy control data D_{CC1} is attached is be supplied to either digital recording apparatus 7 or 8 which is specified by the user. Thus, in the digital recording apparatus 7 or 8, the first or the second audio data D6 or D7 can be recorded on the predetermined recording medium (not shown in Fig.) under the condition in which copy restriction is imposed in the form of the level of the copy control data D_{CC1}.

According to the construction described above, in this receiving apparatus 5, when the audio data D5 of a program specified by the user is not allowed to be copied or is allowed to be copied only once according to the copy control data D_{CC1}, the first or the second audio data D6 or D7 is transmitted to either the digital output terminal 22 or 24 which is specified by the user out of two digital output terminals 22 and 24.

Accordingly, the receiving apparatus 5 can supply the first or the second audio data D6 or D7 to which the copy control data D_{CC1} is added, to either digital recording apparatus 7 or 8 which is specified by the user. As a result, in the digital recording apparatus 7 or 8, copy restriction based on the copy control data D_{CC1} can be imposed.

According to the foregoing construction, in this receiving apparatus 5, only when the copy restriction based on the copy control data D_{CC1} exists, the audio data D5 (D6, D7) is output together with the copy control data D_{CC1} to either digital output terminal 22 or 24 which is specified by the user. Therefore, copy restriction can be imposed at the digital recording apparatus 7 or 8 connected to the digital output terminal 22 or 24. And thereby the execution of unlimited dubbing can be avoided in advance.

Note that, the embodiment described above has dealt with the case of converting the audio data D5 (D6, D7) to which the predetermined copy control data D_{CC1} to be supplied is added, into plural formats (formats corresponding to interface of the IEC958 and IEEE1394) and outputting them. However, the present invention is not only limited to this but also these may be converted into the format corresponding to the interface which is used in various other digital data.

Further, the embodiment described above has dealt with the case of applying the audio data D5 as the digital data to be supplied. However, the present invention is not only limited to this but also it can be widely applied to various digital data such as digitalized video data.

Furthermore, the embodiment described above has dealt ¥with the case of applying the digital output terminal 22 based on the IEC958 and the digital output terminal 24 based on the IEEE1394 as the plural output terminals for outputting the supplied audio data D5. However, the present invention is not only limited to this but also plural digital output terminals based on the IEC958 can be provided in the receiving apparatus and also, plural digital output terminals based on the IEEE1394 can be provided.

Furthermore, the embodiment described above has dealt with the case of applying the control unit 11 as the control means for controlling output of each output terminal according to the contents of copy restriction based on the copy control data D_{CC1}. However, the present invention is not only limited to this but also, in short, provided that the audio data D5 (D6, D7) can be output via only one digital output terminal 22 or 24 which is specified out of the plural digital output terminals 22 and 24 when it is judged that the copy restriction is imposed, control means having various other constructions can be used as the control means.

In this case, as a method to specify a digital output terminal alternatively, the first format processing unit or the second format processing unit can be stopped, in addition to the case where the switches 16 and 17 are switched so that one of them is switched ON.

Furthermore, in the aforementioned embodiment, the copy restriction based on the copy control data D_{CC1} is classified into three: the first level that prohibits copy; the second level that allows copy once; and the three level that allows copy freely. However, the present invention is not limited thereto and a level that allows copy plural number of times (twice or more) can be provided between the second level and the third level.

Furthermore, the embodiment described above has dealt with the case of applying the data processing apparatus according to the present invention to the digital CS broadcasting using the communication satellite 3. However, the present invention is not only limited to this but also it can be widely applied to various broadcasting systems such as the digital terrestrial wave broadcasting and CATV (cable television) broadcasting.

Furthermore, the embodiment described above has dealt with the case of applying the MD recorders as the digital recording apparatus 7, 8 connected to the digital output terminals 22, 24 provided in the receiving apparatus 5. However, the present invention is not only limited to this but also it can be widely applied to the recording apparatus capable of recording various digital data such as a rewritable optical disc apparatus and digital VTR.

According to the present invention as described above, since the control means for controlling the output of each output terminal in order to output digital data only via one specified output terminal out of plural output terminals according to the contents of the copy restriction based on the control data is provided, the digital data can be prevented from being output via plural output terminals when the control data shows the copy restriction. And thus, a data processing apparatus capable of conducting the data control certainly can be realized.

Furthermore, according to the present invention, in the data processing method, by controlling each output system in order to output the digital data via only one specified output system out of plural output systems according to the contents of the copy restriction based on the control data, the digital data is prevented from being output via plural output systems when the control data shows any copy restriction. And thereby, the data processing method capable of conducting the data control certainly can be realized.

### Industrial Applicability

The present invention is utilized for a data processing apparatus and data processing method which are to externally output digital data with predetermined control data to be supplied via plural output systems.

## Claims

1. A data processing apparatus (5) comprising:
means (10) for receiving digital data which is supplied with predetermined copy control data, said predetermined copy control data indicating whether the digital data can be copied not at all, once, or an unlimited number of times;
plural digital output terminals (22, 24); and
control means (11) for controlling output of each said output terminals in response to said predetermined copy control data, wherein the control means restricts output of said digital data to only one specified output terminal from among said plural output terminals if said copy control data indicates that the digital data can be copied not at all or only once.

2. The data processing apparatus according to Claim 1, wherein
said control means adds the predetermined copy control data to said digital data to be output via only said one specified output terminal.

3. A data processing method, for use in apparatus having plural digital output terminals, said method comprising:
receiving digital data which is supplied with predetermined copy control data, said predetermined copy control data indicating whether the digital data can be copied not at all, once, or an unlimited number of times; and
controlling output of each of said plural output terminals response to said predetermined copy control data, wherein said output terminals are controlled in order to restrict output of said plural output terminals if said copy control data indicates that the digital data can be copied not all or only once.

4. The data processing method according to Claim 3, wherein
said control means adds predetermined copy control data to said digital data to be output via only said one specified output terminal.

## Patentansprüche

1. Datenverarbeitungsvorrichtung (5), die aufweist
eine Einrichtung (10) zum Empfangen digitaler Daten, die mit vorbestimmten Kopier-Steuerdaten versehen sind, wobei die vorbestimmten Kopier-Steuerdaten angeben, ob die digitalen Daten überhaupt nicht, einmal, oder in unbegrenzter Anzahl kopiert werden können;
mehrere digitale Ausgabeanschlüsse (22, 24); und
eine Steuereinrichtung (11) zum Steuern der Ausgabe jedes der Ausgabeanschlüsse in Reaktion auf die vorbestimmten Kopier-Steuerdaten, wobei die Steuereinrichtung die Ausgabe der digitalen Daten an nur einen bestimmten Ausgabeanschluss der mehreren Ausgabeanschlüsse beschränkt, falls die Kopier-Steuerdaten angeben, dass die digitalen Daten überhaupt nicht, oder nur einmal kopiert werden können.

2. Datenverarbeitungsvorrichtung gemäß Anspruch 1, wobei
die Steuereinrichtung die vorbestimmten Kopier-Steuerdaten zu den digitalen Daten hinzufügt, um nur über den einen bestimmten Ausgabeanschluss ausgegeben zu werden.

3. Datenverarbeitungsverfahren zur Benutzung in Vorrichtungen, die mehrere digitale Ausgabeanschlüsse aufweisen, wobei das Verfahren aufweist
Empfangen digitaler Daten, die mit vorbestimmten Kopier-Steuerdaten versehen sind, wobei die vorbestimmten Kopier-Steuerdaten angeben, ob die digitalen Daten überhaupt nicht, einmal, oder in unbegrenzter Anzahl kopiert werden können; und
Steuern der Ausgabe jedes der Ausgabeanschlüsse in Reaktion auf die vorbestimmten Kopier-Steuerdaten, wobei die Ausgabeanschlüsse gesteuert werden, um die Ausgabe der digitalen Daten an nur einen bestimmten Ausgabeanschluss der mehreren Ausgabeanschlüsse zu beschränken, falls die Kopier-Steuerdaten angeben, dass die digitalen Daten überhaupt nicht, oder nur einmal kopiert werden können.

4. Datenverarbeitungsverfahren gemäß Anspruch 3, wobei
die Steuereinrichtung die vorbestimmten Kopier-Steuerdaten zu den digitalen Daten hinzufügt, um nur über den einen bestimmten Ausgabeanschluss ausgegeben zu werden.

## Revendications

1. Dispositif de traitement de données (5) comprenant :
des moyens (10) pour recevoir des données numériques qui sont délivrées avec des données de commande de copie prédéterminées, lesdites données de commande de copie prédéterminées indiquant si les données numériques ne peuvent pas être copiées, ne peuvent être copiées qu'une seule fois, ou peuvent être copiées un nombre illimité de fois ;
plusieurs bornes de sortie numérique (22, 24) ; et
des moyens de commande (11) pour commander la sortie de chacune desdites bornes de sortie en réponse auxdites données de commande de copie prédéterminées, dans lequel les moyens de commande limitent la sortie desdites données numériques à une seule borne de sortie spécifiée parmi ladite pluralité de bornes de sortie si lesdites données de commande de copie indiquent que les données numériques ne peuvent pas être copiées ou ne peuvent être copiées qu'une fois.

2. Dispositif de traitement de données selon la revendication 1, dans lequel
lesdits moyens de commande ajoutent les données de commande de copie prédéterminées auxdites données numériques pour qu'elles ne soient délivrées que par l'intermédiaire de ladite borne de sortie spécifiée.

3. Procédé de traitement de données, destiné à être utilisé dans un dispositif comportant plusieurs bornes de sortie numérique, ledit procédé consistant à :
recevoir des données numériques qui sont délivrées avec des données de commande de copie prédéterminées, lesdites données de commande de copie prédéterminées indiquant si les données numériques ne peuvent pas être copiées, ne peuvent être copiées qu'une seule fois, ou peuvent être copiées un nombre illimité de fois ; et
commander la sortie de chacune de ladite pluralité de bornes de sortie en réponse auxdites données de commande de copie prédéterminées, dans lequel lesdites bornes de sortie sont commandées afin de limiter la sortie de ladite pluralité de bornes de sortie si lesdites données de commande de copie indiquent que les données numériques ne peuvent pas être copiées ou ne peuvent être copiées qu'une fois.

4. Procédé de traitement de données selon la revendication 3, dans lequel
lesdits moyens de commande ajoutent des données de commande de copie prédéterminées auxdites données numériques pour qu'elles ne soient délivrées que par l'intermédiaire de ladite borne de sortie spécifiée.
